Europäisches Patentamt

European Patent Office

Office européen des brevets

(11) Veröffentlichungsnummer: **0 241 493**
**B1**

(12) **EUROPÄISCHE PATENTSCHRIFT**

(45) Veröffentlichungstag der Patentschrift: 09.05.90

(51) Int. Cl.⁵: **G 01 L 1/20**, B 60 G 17/00

(21) Anmeldenummer: **86905727.3**

(22) Anmeldetag: **25.09.86**

(86) Internationale Anmeldenummer:
**PCT/DE86/00395**

(87) Internationale Veröffentlichungsnummer:
**WO 87/02129 09.04.87 Gazette 87/08**

(54) **VORRICHTUNG MIT MINDESTENS ZWEI STARREN VERBINDUNGSTEILEN.**

(30) Priorität: **25.09.85 DE 3534211**

(43) Veröffentlichungstag der Anmeldung:
**21.10.87 Patentblatt 87/43**

(45) Bekanntmachung des Hinweises auf die
Patenterteilung:
**09.05.90 Patentblatt 90/19**

(84) Benannte Vertragsstaaten:
**AT BE CH DE FR GB IT LI NL SE**

(56) Entgegenhaltungen:
EP-A-0 114 757     FR-A-2 545 225
EP-A-0 145 001     US-A-1 994 388
EP-A-0 151 421     US-A-3 035 853
DE-A-1 902 944     US-A-3 410 135
DE-A-3 300 640     US-A-3 582 691
DE-A-3 502 275     US-A-4 175 429
FR-A- 516 321      US-A-4 386 791
FR-A-2 126 695

Patents Abstracts of Japan, vol. 9, no. 42
(M-359)(1765), 22 February 1985 & JP, A,
59183137

(73) Patentinhaber: **Pfister GmbH
Stätzlinger Strasse 70
D-8900 Augsburg (DE)**

(72) Erfinder: **HÄFNER, Hans, W.
Fichtenweg 15
D-8890 Aichach-Walchshofen (DE)**

(74) Vertreter: **Kahler, Kurt, Dipl.-Ing.
Postfach 1249 Gerberstrasse 3
D-8948 Mindelheim (DE)**

Courier Press, Leamington Spa, England.

**Beschreibung**

Die Erfindung betrifft ein Gerät, Maschine oder Einrichtung mit zumindest zwei starren Verbindungsteilen gemäß dem Oberbegriff des Patentanspruchs 1, und ein Verfahen zum Behtreiben eines Gerätes, einer Maschine oder eine Einrichtung gemäß dem Oberbegriff des Patentanspruchs 14. An zahlreichen Maschinen und Geräten sind deren Einzelteile oder Einheiten miteinander durch elastische Verbindungsstellen verbunden, wie sie z.B. als sog. "Silentblocs" zur Motorlagerung oder als "Gummimetallelement" bekannt sind. Bei einem Kraftfahrzeug dienen derartige elastische Verbindungsstellen z.B. der Stabilisatorlagerung oder der Verbindung der Federbeine zum Fahrwerk. (G. Niemann: Maschinenelemente 1975, S.249 f) Bei derartigen Geräten, Maschinen und Vorrichtungen, insbesondere Fahrzeugen, besteht bei der Entwicklungs- und Versuchsarbeit das Bedürfnis, die an und in den Vorrichtungen auftretenden Kräfte und/oder Momente festzustellen. Beispielsweise werden die Fahreigenschaften eines Kraftfahrzeuges erheblich beeinflußt von den während der Fahrt wirkenden Kräfte, wie Fahrbahnbeschaffenheit, Seitenwind usw., sowie von der Fahrzeugzuladung.

Letztere ist beispielsweise mittels einer Kraftmeßvorrichtung gemäß der EP-A-0145001 festzustellen, in dem das Fahrzeug auf eine damit ausgerüstete Waage gefahren wird. Die Kraftmeßvorrichtung besteht aus zwei parallelen Schwingplatten, zwischen denen eine Schicht aus elastomerem Stoff angeordnet ist und die aufliegende Belastung lastproportional auf einen eingebetteten Drucksensor überträgt. In bevorzugter Ausbildung nehmen die Schwingplatten die Größe der zu wiegenden Vorrichtung ein, z.B. bei Fahrzeugwaagen die Größe eines Lastkraftwagens. Alternativ zur flächigen Ausbildung wird eine diskrete Kraftmeßzelle gezeigt, bei der der Rand an der Abschnittsplatte hochgezogen ist. Auch diese Kraftmeßzellen dienen liediglicn zum Aufsetzen einer Last.

Mit derartigen bekannten Kraftmeßzellen sind zwar neben der Gewichtsmessung auch Achslast- oder Radlastmessungen an Fahrzeugen möglich, jedoch nur im stationären Zustand, wobei die zu wiegende Vorrichtung gesondert auf die Waage gefahren oder befördert werden muß. Insbesondere bei der Messung an Fahrzeugen sind diese Radlastuntersuchungen mittels einer stationären Waage sehr zeitraubend und mühevoll.

Zudem sind die während der Fahrt wirkenden Kräfte mit derartigen Kraftmeßzellen oder Kraftmeßplatten überhaupt nicht festzustellen, so daß die Einflußfaktoren wie Beschleunigung, Verzögerung, Straßenbeschaffenheit, Stärke und Richtung des Windes nicht festgestellt werden können.

Aus der nachfolgenden Aufstellung sind zwar Kraftmeßvorrichtungen bekannt, die eine Erfassung der wirkenden Kräfte während der Fahrt eines Fahrzeuges oder dem Betrieb einer Maschinen erlauben, jedoch sind hier gesonderte, aufwendige Kraftmeßvorrichtungen nötig.

Die EP-A-0162 608 offenbart einen Kipperlastwagen, bei dem zur Feststellung des Ladegewichts der Aufbau in abgesenkter Position auf Kraftmeßzellen lagert. Während der Fahrt kann auf Grund einer Auswertung von Druckspitzen der Straßenzustand und die Reifenbeschaffenheit festgestellt werden.

Die EP-A-0151 421 befaßt sich mit einem Straßenfahrzeug, bei dem in der Aufhängung zwei piezoelektrische Platten als Vibrationssensor eingefügt sind. Abhängig von den Schwingungen entsprechend den Straßenverhältnissen wird die Federung auf "hart", "weich" oder "mittel" eingestellt.

Die DE-A-35 02 337 befaßt sich mit einer Fahrzeugfederung, bei der abhängig von einer Richtungsänderung an Hand der Winkelgeschwindigkeit des Lenkrades und der Fahrzeuggeschwindigkeit die Fluid-Federkammern-Zufluß- und Abflußventile geregelt werden.

Die DE-C-19 02 944 beschreibt ein Kraftfahrzeug, bei dem ein Kurvenschleudern dadurch vermieden wird, daß über Kreisel, Querbeschleunigungs- und Geschwindigkeitssensoren die Bremsanlage, das Gaspedal und die Radstellung (Sturz, Spreizung, Federverhärtung) unter Vergleich mit Grenzwerten gesteuert werden.

Die DE-A-20 09 489 gibt an, daß bei einem Kraftfahrzeug mittels Meßelementen und Steuervorrichtungen Bewegungen oder Kraftänderungen des Fahrwerks oder des Aufbaus ausgeglichen werden können. Gemäß der DE-A-33 00 640 erfolgt bei einem Kraftfahrzeug eine Zusatzlenkung abhängig von Steuergrößen wie Geschwindigkeit und Querbeschleunigung.

Gemäß DE-A-30 13 114 wird die Relativlage des Aufbaus eines Kraftfahrzeugs gegenüber mehreren Fahrzeugachsen über Achssensoren und druckempfindliche Drucksignaleinrichtungen, nämlich ein Manometer festgestellt.

Gemäß der DE-C-26 36 899 werden bei einem Kraftfahrzeug mittels lastabhängiger Schwellwertschalter Überladungen angezeigt.

Gemäß der US-A-30 35 853 erfolgt eine Stabilisierung der Aufhängung des Aufbaus am Fahrgestell mittels Kraftmeßzellen, die an den hydraulischen Zylinder der Aufhängung angeschlossen sind.

Gemäß der DE-A-32 36 080 wird ein Drehmomentdehnungsmesser für die Feststellung des an der Lenksäule ausgeübten Drehmoments und zur Regelung der Servolenkung verwendet.

Die GB-A-20 79 701 zeigt ein Kraftfahrzeug mit Schräglagenkompensation unter Verwendung eines Pendels.

Die DE-A-30 16 338 offenbart eine in einem Kraftfahrzeugreifen eingebaute piezoelektrische Meßzelle mit drahtloser Übertragung der Meßwerte zu einer Steuereinrichtung und Überprüfung des Reifenzustandes.

Soweit Sensoren bei bekannten Kraftfahrzeugen vorgesehen sind, handelt es sich um die diskreten Elemente, die eigens an zweckmäßigen Stellen des Fahrzeugs eingebaut sind, wobei entsprechende Vorrichtungen zur geeigneten Befestigung vorgesehen werden müssen. Derartige Konstruktionen sind raum- und kostenaufwendig.

Obwohl die Feststellung und Ausnutzung von Meßwerten zur Bestimmung des Zustands und des Betriebs anhand eines Kraftfahrzeugs erläutert wurden, besteht eine ähnliche Situation bei vielen anderen Geräten, Maschinen und Einrichtungen, seien es stationäre Brennkraftmaschinen, elektrische Maschinen, Werkzeugmaschinen, Baumaschinen, Kränen und dergleichen.

Darstellung der Erfindung:

Die Erfindung befaßt sich mit Geräten Maschinen und Einrichtungen, bei denen zumindest an einigen elastischen Verbindungsstellen, zwischen starren verbindunds teilen auf einfache Weise Kräfte und/oder Momente gemessen werden können. Dies soll mittels einer raum- und kostengünstigen Anordnung durchgeführt werden können.

Die erfindungsgemäße elastische Verbindung zweier starrer Teile zwischen denen elastomeres Material angeordnet ist, ist dadurch, gekennzeichnet, daß die Kraftmeßzelle mit dem Sensor in den Verbindungsteilen integriert ist.

Weitere Merkmale und Vorteile der erfindungsgemäßen Verbindung sowie deren Verwendung bei Geräten, Maschinen und Einrichtungen sind in den abhängigen Ansprüchen gekennzeichnet.

Kurze Beschreibung der Zeichnungen:

Fig. 1 ist eine schematische Draufsicht auf ein Kraftfahrzeug, das zur Durchführung eines erfindungsgemäßen Verfahrens geeignet ist und bei dem erfindungsgemäße Verbindungen vorgesehen sind;

Fig. 2 ist eine Perspektivansicht einer beispielsweisen Anbringung einer Radlastmeßeinrichtung in einem PKW-Federbein;

Fig. 3 ist eine Schnittansicht einer beispielsweisen Radlastmeßeinrichtung gemäß Fig. 2;

Fig. 4 ist eine Seitenansicht einer Radaufhängung, wie sie beispielsweise bei einem Schienenfahrzeug oder LKW Verwendung finden kann;

Fig. 5 ist eine Seitenansicht einer weiteren Ausführungsform einer Radaufhängung mit integrierter Kraftmeßzelle;

Fig. 6 ist eine schematische Seitenschnittansicht einer weiteren Ausführungsform einer Radaufhängung mit integrierter Kraftmeßzelle;

Fig. 7 ist eine schematische Schnittseitenansicht einer Ausführungsform einer Lagerstelle mit integrierter Kraftmeßzelle; Fig. 8—11 sind schematische Schnittseitenansichten von Ausführungsformen von Verbindung bzw. Lagerstellen wie sie beispielsweise für Torsionsstäbe von Kraftfahrzeugen verwendet werden können, mit integrierten Kraftmeßzellen;

Fig. 12—14 sind schematische Seitenansichten von Verbindungen zwischen konzentrischen Rotationsteilen mit integrierten Kraftmeßzellen;

Fig. 15 und 16 sind schematische Schnittseitenansichten von weiteren Ausführungsformen von Verbindungen, die Schwingmetallfedern verwenden, mit integrierten Kraftmeßzellen;

Fig. 17 ist eine schematische Schnittseitenansicht einer besonders einfachen Ausführungsform einer elastischen Verbindung mit integrierter Kraftmeßzelle;

Fig. 18 und 19 sind schematische Schnittansichten von elastischen Verbindungen mit integrierten Meßzellen zum direkten Feststellen von Drehmomenten und.

Fig. 20 ist ein Schaltbild eines Fahrzeugsteuersystems.

Wege zur Ausführung der Erfindung:

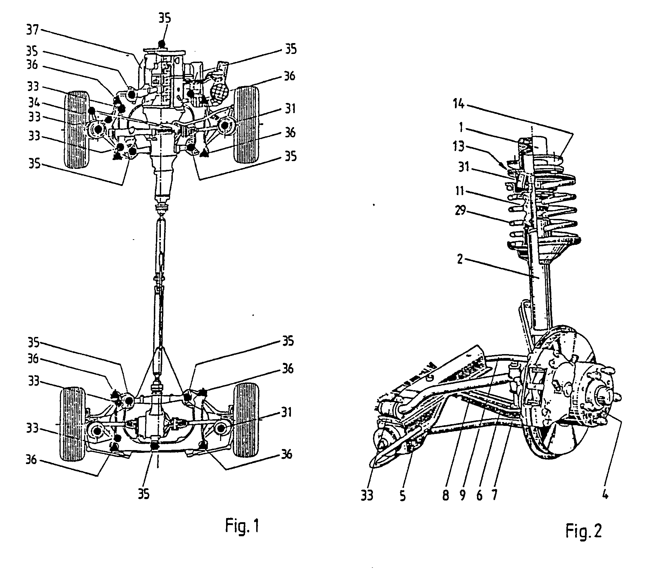

Fig. 1 zeigt eine Draufsicht auf ein Fahrgestell eines Personenkraftwagens mit beispielsweisen Möglichkeiten der Anbringung von Kraftmeßzellen. Insbesondere sind veranschaulicht:

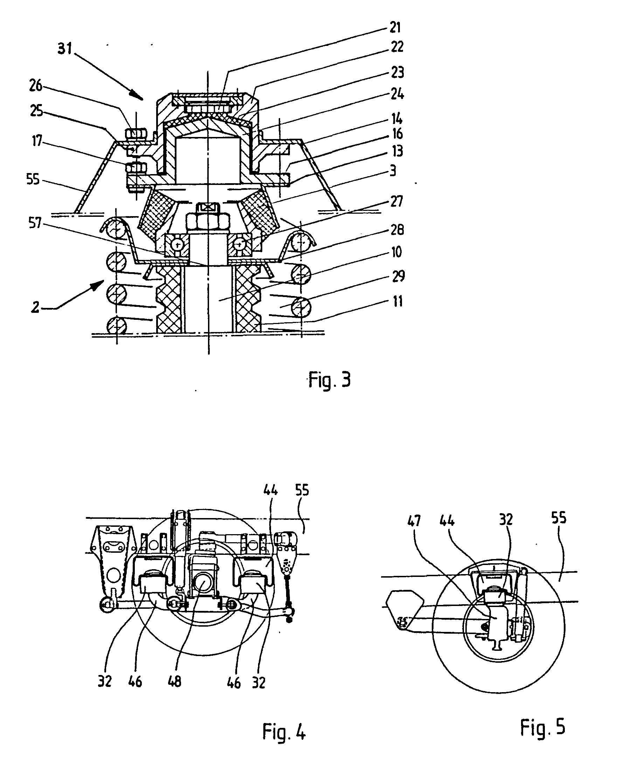

Kraftmeßzellen 31 an den Federbeinen (vgl. auch Fig. 2 und 3)

Kraftmeßzellen 32 zwischen Blattfedern oder Luftfedern und der Karosserie (siehe Fig. 4)

Kraftmeßzellen 33 an den Lenker-, Führungs- und Torsionsstabköpfen.

Kraftmeßzellen 34 an den Spurstangenköpfen

Kraftmeßzellen 35 an den Motor-, Getriebe- und Differentiallagerstellen und

Kraftmeßzellen 36 an den Fahrwerks- und Antriebssätteln hinten und vorne.

Falls erforderlich können auch an aderen Stellen, an denen Kräfte oder Momente auftreten, entsprechende Kraftmeßzellen angeordnet werden, insbesondere auch an einer Anhängerkupplung.

Mittels der am Fahrzeug angebrachten Kraftmeßelemente lassen sich insbesondere die auf die Räder wirkenden Kräfte, Antriebsund Bremsmomente, eine Fahrzeugbelastung und -beladung, die auf die Lenkung wirkenden Kräfte und Momente sowie die auf die Karosserie, die Fahrwerks- und Antriebssättel wirkenden Kräfte und Momente unmittelbar messen.

Aus diesen Meßwerten lassen sich dann mittels einer Datenverarbeitungseinrichtung und gegebenenfalls an Hand gespeicherter und auf Wunsch veränderbarer Werte folgende Parameter mittelbar bestimmen:

So läßt sich auf Grund festgestellten Radkräfte, gegebenenfalls unter Berücksichtigung anderer Parameter und gespeicherter Werte der Reifenzustand, insbesondere Rundlauf, Auswuchtung und Druck feststellen. Auch lassen sich auf Grund der unmittelbar gemessenen Werte Rückschlüsse auf die Fahrbahnqualität ziehen. Ähnliches gilt für den Fahrwerks- und Stoßdämpferzustand. Wichtig ist auch die Bestimmung des Radschlupfes auf Grund der Raddrehmomente, beispielsweise in Verbindung mit ABS-Systemen.

Zur Optimierung der Fahreigenschaften können ferner der Fahrtwiderstand, auf die Karosserie vorne, hinten und seitlich wirkende Auftriebskräfte und auf Grund von Seitenwind auftretende Seitenkräfte bestimmt und ausgenützt werden.

Mittels der zur Motorlagerung dienenden Kraftmeßzellen 35 kann das am Motor wirkende Drehmoment ermittelt werden.

Die unmittelbar gemessene bzw. die daraus abgeleiteten Werte und Parameter dienen dann zur entsprechenden Einstellung und/oder Regelung der verschiedenen Einrichtungen des Fahrzeuges sowie einer Weiterverarbeitung für Informationszwecke.

So kann beispielsweise statisch oder dynamisch die Federung, Dämpfung und Höhenlage des Fahrzeuges automatisch für eine Optimierung der Fahreigenschaften geregelt werden. Weiterhin ist die Beeinflussung der Brems- und Beschleunigungskräfte und der Antriebsverteilung auf die Räder, insbesondere bei Allradantrieb bzw. ABS-System von Bedeutung. Eine Lenkungsregelung beispielsweise in Form einer automatischen Veränderung der Lenkgeometrie, insbesondere der Vorspur, der Steuerung und des Lenkpunktes können automatisch Seitenwindeinflüsse ausgleichen. Auch an eine Reifendruckregelung wäre zu denken oder zumindest eine Anzeige des erforderlichen Reifendrucks. Ferner wäre eine Beeinflussung des Drehmomentenwandlers eines automatischen Getriebes möglich.

Anhand des ermittelten am Motor wirkenden Drehmoments kann unter Hinzuziehung der Drehzahl die tatsächlich vom Motor abgegebene Leistung bestimmt und zur Optimierung des Motorbetriebs (optimales Drehmoment) gegebenenfalls im Zusammenhang mit dem Drehmomentenwandler des automatischen Getriebes verwendet werden.

Fig. 2 zeigt ein Beispiel der Anordnung einer Kraftmeßzelle 31 (vgl. auch Fig. 1) in Zusammenwirken mit einem Federbein eines Personenkraftfahrzeuges zur Feststellung der Radlast. Ein oberer Flansch 13 eines Schwingmetalllagers 3 des Federbeines 2 ist mit einer Kraftmeßzelle 31 verbunden, die bevorzugt eine eiastostatische Kraftmeßzelle ist wie sie in der EP-OS 145 001, beschrieben ist (vgl. auch Fig. 3).

Die Horizontalführung des Radlagers 4 erfolgt vom Fahrgestell 5 aus über Lenker 6 und 7, einen Torsionsstab 8 und eine Lenkstange 9. Die Wirkung der aus der Horizontalführung entstehenden Kraftnebenschlüsse auf die Radlastmessung wird durch lastabhängige Kalibrierung kompensiert.

Fig. 3 veranschaulicht Einzelheiten der Anbringung der Kraftmeßzelle 31 am Federbein 2.

Die Kraftmeßzelle 31 der bevorzugten Ausführungsform besteht aus zwei ineinandergeschachtelten topfartigen Elementen, nämlich einem äußeren Druckzylinder 22 und einem inneren Lastkolben 24, zwischen denen sich umfangsmäßig und zwischen dem Boden des Druckzylinders 22 und der Oberseite des Lastkolbens 24 elastomeres Material 23 befindet. Im Druckzylinder 22 ist ein Druckwandler oder Sensor 21 angeordnet, der beispielsweise piezoresistiv arbeitet. Der Druckwandler 21 wird von der Oberseite in den Druckzylinder 22 eingesetzt und steht mit seiner Unterseite mit dem elastomeren Material in Verbindung. Die Karosserie 55 des Kraftfahrzeuges besitzt einen Flansch 14, der beispielsweise mit einem am Druckzylinder 22 ausgebildeten Flansch 25 mittels einer entsprechenden Schraubverbindung 26 verbunden ist.

Andererseits ist der Lastkolben 24 ebenfalls mit einem Flansch 16 versehen, der mit dem Flansch 13 des Schwingmetalllager 3 des Federbeines 2 über eine Schraubverbindung 17 verbunden ist. Auf dem oberen Ende einer in das Schwingmetalllager 3 ragenden Kolbenstange 10 ist ein Rillenkugellager 27 angebracht, das eine Drehbeweglichkeit zwischen Federbein und Kraftmeßzelle gewährleistet. An einem Ansatz 57 der Kolbenstange 10 stützt sich ein Federteller 28 ab, mit dem eine Schraubenfeder 29 in Eingriff ist. Die Kolbenstange 10 ist von einer Gummihohlfeder 11 umgeben.

Die Masse der Karosserie 55 drückt auf das zwischen dem Druckzylinder 22 und dem Lastkolben 24 befindliche elastomere Material 23, das diesen Druck an den Druckwandler 21 weitergibt, der diesen Druck in ein elektrisches Signal umwandelt und der Auswertevorrichtung zuführt. Die Radlast kann einerseits im Stillstand des Fahrzeuges etwa nach bzw. während des Beladens bestimmt werden. Dabei besteht die Möglichkeit die Zuladung dadurch zu bestimmen, daß zuerst das Nettogewicht der Karosserie vor der Zuladung bestimmt wird und während der Zuladung eine laufende Anzeige gegeben wird. Eine derartige Möglichkeit ist bevorzugt bei Lastkraftwagen vorzusehen.

Andererseits kann auf Grund der statsich festgestellten Radlast eine entsprechende Einstellung der Federung, Dämpfung etc. vorgenommen werden. Hierbei läßt sich auch eine asymmetrische Belastung der einzelnen Räder berücksichtigen.

Gemäß einer Weiterbildung der vorliegenden Erfindung kann jedoch auch während der Fahrt des Fahrzeuges das dynamische Verhalten der auf das Rad ausgeübten Kräfte durch kontinuierliche Meßung festgestellt und für die Optimierung der Fahreigenschaften ausgenutzt werden.

Fig. 4 veranschaulicht die Lagerung und Aufhängung eines Rades, wie sie etwa bei einem LKW oder einem Schienenfahrzeug Verwendung finden könnte. Insbesondere zeigt die Fig. 4 Kraftmeßelemente 32, die ähnlich ausgestaltet sein können, wie das in Fig. 3 gezeigte Kraftmeßelement.

Fig. 4 zeigt, daß die Karosserie 55 über Luftfedern 44 unter Einfügung der Kraftmeßzellen 32 auf den Tragelementen 46 der Achsenanordnung 48 sitzt.

Fig. 5 zeigt eine alternative Ausführungsform der Abstützung der Karosserie 55 über eine Hohlgummi-Luftfeder 44 auf einem Trageelement 47, das mit der in der Fig. 5 nicht sichtbaren Radachse in Verbindung steht.

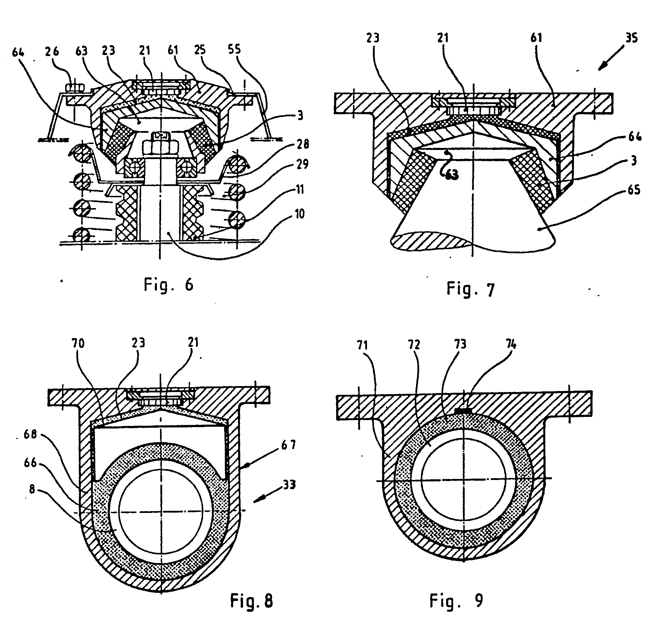

Fig. 6 zeigt eine gegenüber der Ausführungsform nach Fig. 3 noch weiter integrierte Ausführungsform der erfindungsgemäßen Verbindung; gleiche bzw. entsprechende Teile sind mit den

gleichen Bezugzeichen versehen wie in Fig. 3 und nicht weiter beschrieben. Zu beachten ist der Wegfall der Flansche 13 bzw. 16 und der Schraubverbindung 17 und die wesentliche Verringerung der Höhe der Anordnung.

Das Schwingmetalllager 3 ist bei dieser Ausführungsform direkt in einer sich nach innen verjüngenden Vertiefung 63 eines Druckkolbens 64 eingesetzt, der wiederum in einem Druckzylinder 61 ähnlich dem Druckzylinder 22 untergebracht ist. Es ergibt sich somit eine vollständige Integration der Kraft-/Momentmeßeinrichtung mit geringem Fertigungsaufwand. Ferner nimmt die Kraft-/Momentmeßeinrichtung praktisch keinen zusätzlichen Raum ein.

Fig. 7 zeigt eine Ausführungsform der erfindungsgemäßen Verbindung, wie sie beispielsweise für eine Kraftmeßzelle 35 zur Lagerung des Motors bzw. des Getriebes Verwendung finden kann. Diese Ausführungsform ist besonders einfach, da die Verbindung lediglich als Auflager auf einer Basis 65 des Fahrgestells ohne seitliche Fixierung dient. Um so wichtiger ist auch hier die vollständige Integration der Kraftmeßzelle in die elastische Verbindung.

Wie bei der Ausführungsform nach Fig. 6 ist das Schwinglager 3 wiederum im Inneren der sich verjüngenden Vertiefung 63 des Druckkolbens 64 angebracht, der im Inneren des Druckzylinders 61 angeordnet ist. Dieser kann beispielsweise mittels Schrauben am Motor 37 (Fig. 1) befestigt werden. Auch hier ergibt sich durch die Einfügung der Kraft-/Drehmomentenmeßeinrichtung keinerlei Vergrößerung der Höhe der Anordnung. Die Unterbringung des Schwingmetalllagers 3 im Inneren des Druckkolbens 64 stellt eine besonders einfache Befestigung dar.

Fig. 8 veranschaulicht eine weitere Ausführungsform der Erfindung mit integrierter Kraftmeßzelle 33 (vgl. auch Fig. 1 und 2). Auch hier zeigt sich eine vollständige Integration der Kraft-/Momentenmeßeinrichtung in der Verbindungsstelle. Der Torsionsstab 8 (vgl. auch Fig. 2) wird von elastomerem Material 66 umgeben, das nach außen durch die Innenwand eines im Bereich des Torsionsstabes 8 halbzylinderförmig ausgebildeten Druckzylinders 67 abgegrenzt wird. Der halbzylinderförmige- Teil 68 geht in einen zylinderförmigen Abschnitt 69 über, dessen Längsachse senkrecht zur Längsachse des Torsionsstabes 8 verläuft. Ein an seiner Rücksseite an die Rundung des elastomeren Materials 66 angepaßter Kolben 70 ist in dem zylinderförmigen Abschnitt 69 geführt und wirkt über das elastomere Material 23 wiederum auf den Druckwandler oder -sensor 21 ein. Die auf den Torsionsstab 8 wirkende senkrechte Kraft wird über das elastomere Material 66 an den Kolben 70 und von diesem über das weitere elastomere Material auf den Sensor 21 übertragen.

Bei den bisherigen Ausführungsformen wurde insbesondere eine integrierte Kraftmeßzelle gemäß EP-OS 145 001 verwendet. Eine derartige Kraftmeßzelle ist insbesondere dadurch ausgezeichnet, daß zwischen einem zylinderförmigen Teil und einem darin geführten Kolben ein sehr enger Spalt beispielsweise in der Größenordnung von 0.1 bis 2 mm gebildet wird, der verhältnismäßig hoch ist und vollständig mit elastomerem Material gefüllt ist. Zwischen der Stirnfläche des Kolbens und dem Boden des zylinderförmigen Teils ist ein Raum gebildet, der mit elastomerem Material gefüllt ist. Ein Druck- oder Kraftsensor ist entweder eingebettet in das elastomere Material oder aber derart von außen zugänglich bzw. einsetzbar in eine Wand des zylinderförmigen Teils eingesetzt, daß insbesondere die kraftaufnehmende Fläche des Sensors mit dem elastomeren Material in Verbindung steht.

Die Figuren 9 bis 14 zeigen schematisch Ausführungsformen, die eine weitere Vereinfachung und Integrierung der Kraftmeßzelle in die elastische Verbindung zweier starrer Teile veranschaulichen.

Insbesondere ist bei diesen Ausführungsbeispielen der Kolben 70 (Fig. 8) ganz weggelassen, so daß sich Ausführungsformen ergeben, bei denen ein zylinderförmiges Teil 72 von einem konzentrischen Raum mit elastomeren Material 73 umgeben ist, der beispielsweise in einem anflanschbaren Teil 71 ausgebildet ist. Es ergibt sich somit eine Lagerstelle, wie sie beispielsweise für einen Torsionsstab einer Radaufhängung eines Kraftfahrzeugs Verwendung finden könnte. Alternativ dazu könnte das Teil 72 jedoch auch ein Lager darstellen, in dem sich eine Welle dreht.

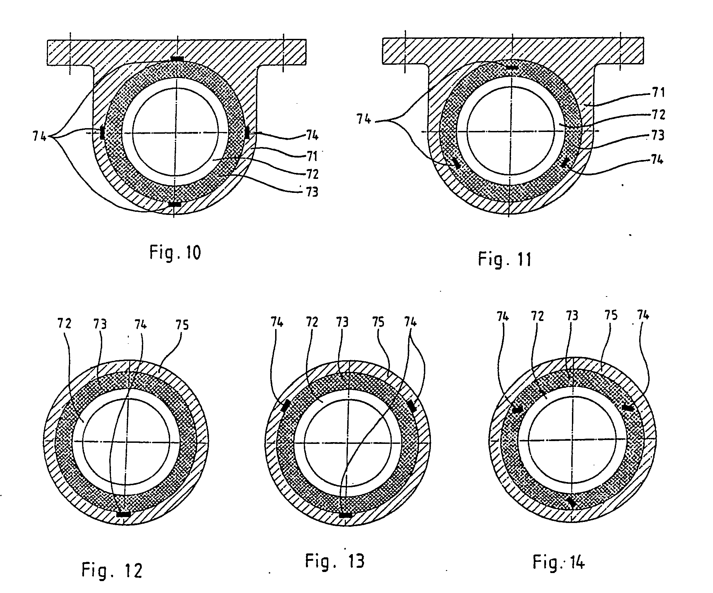

Die Ausführungsbeispiele der Figuren 9 bis 11 unterscheiden sich lediglich durch die unterschiedliche Anzahl und Anordnung von Drucksensoren. Bei den Ausführungsformen gemäß den Figuren 9 und 10 sind die Drucksensoren in die zylindrische Innenmantelfläche des Teiles 71 eingelassen, wobei bei der Ausführungsform nach Fig. 9 lediglich ein Drucksensor 74 und bei der Ausführungsform nach Fig. 10 mehrere beispielsweise vier Drucksensoren Verwendung finden, die eine Belastung in den vier Richtungen durch entsprechende elektrische Signale wiedergeben.

Bei der Ausführungsform nach Fig. 11 sind die Drucksensoren 74, im speziellen Fall drei Drucksensoren 74, in dem elastomeren Material 73 eingebettet, so daß keinerlei mechanische Bearbeitung der Teile 71 bzw. 72 erforderlich ist.

Die Figuren 12 bis 14 zeigen Ausführungsbeispiele ähnlich denjenigen der Figuren 9 bis 11, wobei jedoch das äußere starre Teil als zum inneren starren Teil 72 konzentrisches Rohr 75 ausgebildet ist. Die Anordnung der Kraftmeßzellen entspricht etwa derjenigen der Ausführungsformen der Figuren 9 bis 11.

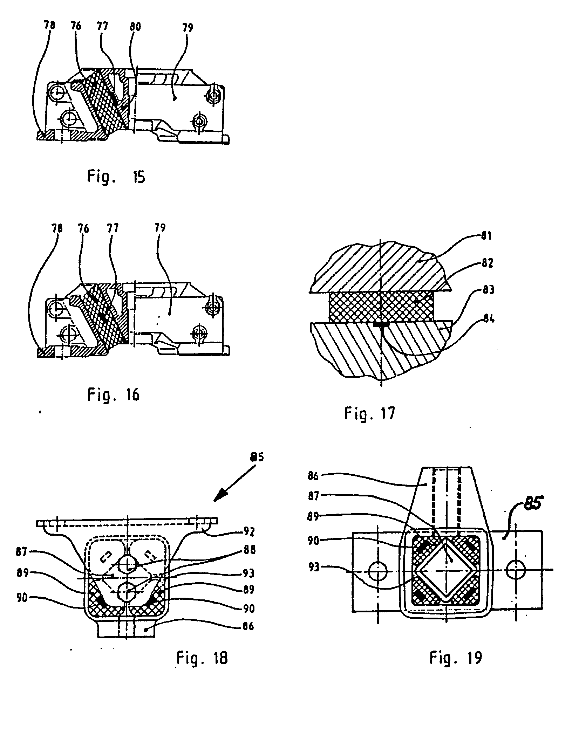

Die Figuren 15 und 16 zeigen Ausführungsformen mit einer konischen bzw. schräggestellten Schwingmetallfeder mit der beispielsweise ein Maschinenteil 79 dreidimensional elastisch gelagert ist, wodurch in bekannter Weise die Übertragung von Schwingungen auf ein Gestell 78 vermieden wird. Ein oder mehrere Kraftmeßzellen 77 können entweder in dem elastomeren Material 76 eingebettet oder an einer der Kontaktflächen des Maschinenteils 79 bzw. des Gestells 78 in dem elastomeren Material 76 eingelassen sein.

Fig. 17 zeigt die einfachste Ausführungsform einer elastischen Verbindung mit integrierter Kraftmeßeinrichtung, bei der ein oberes starres Teil 81 über einen Block aus elastomerem Material 82 auf einem Unterteil 83 elastisch abgestützt ist. Ein oder mehrere Drucksensoren 84 können entweder im elastomeren Block 82 eingebettet oder aber in einer der Kontaktflächen der Teile 81 bzw. 83 mit dem elastomeren Block 82 integriert eingelassen sein.

Es ist zu beachten, daß bei den verschiedenen Ausführungsformen das elastomere Material mit den das Material berührenden Kontaktflächen der starren Teile, vorzugsweise eng verbunden, insbesondere vulkanisiert ist. Dies gewährleistet eine gleichmäßige Übertragung der auf die starren Teile wirkenden Kräfte und Momente. Auch bei einer Serienfertigung ergeben sich dann Verbindungen, die eine verhältnismäßig sicher angebbare jeweils gleiche Kennlinie besitzen. Die Kraft- oder Momentenmessung kann deshalb ohne aufwendige Justierungen mit ausreichender Genauigkeit durchgeführt werden.

Wie bereits vorstehend ausgeführt, können mittels der integrierten Drucksensoren nicht nur Kräfte gemessen werden, die in bzw. an der Verbindung auftreten. Drehmomente, die an der Verbindung wirken, ergeben sich durch entsprechende Multiplikation der gemessenen Kraftkomponenten mit dem dazugehörigen Hebelarm. Durch entsprechende Anordnung und Ausrichtung der Drucksensoren lassen sich aber auch Drehmomente direkt feststellen. Ein Beispiel dafür ist die Verbindung gemäß Fig. 14, bei der die Drucksensoren 74 beispielsweise unter einem Winkel von 45° gegenüber der radialen Richtung angeordnet sind. Bei feststehendem äußeren starren Zylinderteil 75 messen somit die Drucksensoren 74 ein auf das innere Teil um die Mittellängsachse ausgeübtes Drehmoment. Auch eine radiale Anordnung der Drucksensoren ist möglich.

Fig. 18 veranschaulicht ein Ausführungsbeispiel einer erfindungsgemäßen Verbindung, bei der neben einer Kräftemessung auch das Drehmoment direkt festgestellt werden kann. Ein erstes starres, ortsfest angebrachtes Teil 85 besitzt zwei in Abstand zueinander angeordnete Flansche 92, zwischen denen sich jeweils stirnseitig etwa mittels Schrauben 88 befestigt eine Stange 87 mit nichtkreisförmigem, im Beispiel quadratischem Querschnitt erstreckt. Ein zweites starres Teil 86, etwa in Form eines Lenkers ist an seinem einen Ende mit einer Öffnung 93 versehen, die die Stange 87 umgibt. Die Öffnung 93 hat vorzugsweise ebenfalls einen nichtkreisförmigen, im Beispiel quadratischen Querschnitt, wobei die Kanten der Stange 87 gegenüber den Kanten der Öffnung 93, beispielsweise um 90° versetzt sind. Die Öffnung 93 ist um einiges größer als der Querschnitt der Stange 87, wobei der Zwischenraum zwischen den Fläche der Stange 87 und den Kanten der Öffnung 93 mit Polstern 89 aus elastomerem Material ausgefüllt sind, in denen je ein Drucksensor 90 untergebracht ist. Im Ausführungsbeispiel sind die Drucksensoren 90 derart ausgerichtet, daß ihre druckaufnehmenden Flächen parallel zu den Flächen der Stange 87 verlaufen. Wird auf den Lenker 86 ein Drehmoment um die Längsachse der Stange 87 ausgeübt, so kann mit Drucksensoren 90 dieses Drehmoment direkt festgestellt werden.

Fig. 19 zeigt eine Verbindung zwischen einem starren, ortsfest angeordneten Teil 85 und einem weiteren starren Teil 86. Auch hier wird wiederum eine Stange 87 mit vorzugsweise quadratischem Querschnitt verwendet. Die Polster 89 entsprechen denjenigen der Figur 18.

Wie ersichtlich, sind bei allen Verbindungen die Kraftmeßeinrichtungen direkt integriert, so daß sich besonders günstige Anordnungen bezüglich der Kosten und des Raumes ergeben.

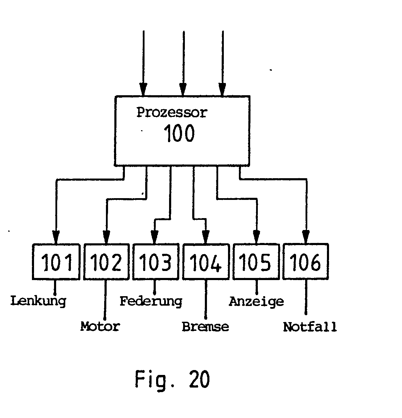

Sind in ein Kraftfahrzeug gemäß Fig. 1 an entsprechenden Stellen derartige mit Kraft-/Momentmeßeinrichtungen versehene elastische Verbindungen vorgesehen, dann können die von den Drucksensoren abgegebenen elektrischen Signale einem Prozessor 100 zugeführt werden, der die Zentraleinheit des in Fig. 20 gezeigten Steuersystems darstellt. Ein Fachmann auf dem Gebiete der Datenverarbeitung ist in der Lage ein entsprechendes Programm für den Prozessor zu erstellen, der aufgrund der festgestellten Werte, von gespeicherten Bezugswerten und entsprechender mathematischer Beziehungen der Werte zueinander die verschiedensten Steuersignale erzeugt. Insbesondere kann von dem Prozessor 100 ein Steuersignal an eine Lenkungssteuerschaltung 101 abgegeben werden, über die der Lenkwinkel bzw. der Grad der Servolenkung, die Spureinstellung oder dergleichen beeinflußt werden können. Ein weiters Steuersignal kann an eine Motorbetriebs-Steuerschaltung 102 angelegt werden, über die eine Regelung der Kraftstoffzufuhr des Zündzeitpunkts und ähnliches mehr erfolgt. Der Prozessor 100 kann auch weitere Steuersignale an eine Federungssteuerschaltung 103 anlegen, mittels der die Höhe der Karosserie sowie der Grad der Federung der einzelnen Radaufhängungen abhängig von der augenblicklichen Belastung durch Zuladung, Fahrt und Seitenwind sowie Kurvenlage geregelt werden. Ein weiteres Steuersignal wird einer Bremssteuerschaltung 104 zugeführt, die ein ABS-System regelt. Ein weiteres Steuersignal kann einer Notfall-Steuereinheit 106 zugeführt werden, die entsprechende Maßnahmen im Notfall auslöst, wie das Aufblasen eines Schutz-Luftsackes. Steuersignale, die an eine Anzeigesteuerschaltung 105 angelegt werden, bewirken in dieser, daß entsprechende Anzeigesteuerungen ausgelöst werden, die dem Benutzer des Fahrzeuges entsprechende optische und akustische Anweisungen geben.

Für andere Geräte, Maschinen und Einrichtungen kann ein entsprechendes Steuersystem vom Fachmann gemäß den jeweiligen Anforderungen aufgebaut werden.

Bezüglich des speziellen Aufbaus und der Wirkungsweise der in die Verbindungen gemäß den Ausführungsbeispielen integrierten Kraft-/Moment-Meßeinrichtungen wird auf die EP-A-145 001 verwiesen, deren Offenbarung zum Inhalt der vorliegenden Patentanmeldung gemacht wird. Insbesondera können diedort angegebenen laterialien für das elasomere Material verwendet werden und die dort angegebenen Dimensionen sind Anhaltspunkte für die Dimensionierung der erfindungsgemäßen Verbindungen. Auch die in dieser Druckschrift offenbarten verschiedenen Arten von Sensoren sind unter anderem im Zusammenhang mit der vorliegenden Erfindung geeignet.

Im Zusammenhang mit Fig. 8 sei noch erwähnt, daß derartige Verbindungen auch Kraftmeßzellen 36 gemäß Fig. 1 darstellen können. Bei der im allgemeinen symmetrischen Anordnung (links und rechts) zweier Verbindungen läßt sich dann auf Grund des bekannten Abstandes der beiden Verbindungan das zwischen ihnen wirkende Drehmoment unter Verwwwendung der durch die Drucksensoren festgestellten Kräfte errechnen.

## Patentansprüche

1. Gerät, Maschine oder Einrichtung mit zumindest zwei starren Verbindungsteilen (22/24, 61/64, 71/72, 79/80, 86/87), zwischen denen elastomeres Material (23, 73, 76, 89) angeordnet ist und mit wenigstens einer Kraftmeßzelle (31—36) mit zumindest einem Sensor (21, 74, 77, 90), der die zwischen den Verbindungsteilen auftretenden Kräfte und/oder Momente feststellt, dadurch gekennzeichnet, daß die Kraftmeßzelle (31-36) mit dem Sensor (21, 74, 77, 90) in den Verbindungsteilen (22/24, 61/64, 71/80, 86/87) integriert ist.

2. Gerät, Maschine oder Einrichtung nach Anspruch 1, dadurch gekennzeichnet, daß das elastomere Material (76) mit Flächen der starren Verbindungsteile (z.B. 64/65, 79/80) eng verbunden, insbesondere vulkanisiert ist und als Schwingmetalllager (3) ausgebildet ist.

3. Gerät, Maschine oder Einrichtung nach Anspruch 1 oder 2, dadurch gekennzeichnet, daß die Verbindungsteile (22/24, 61/64, 71/72) zu einem im wesentlichen geschlossenen Raum geformt sind, in dem sich das elastomere Material (23, 73) befindet, mit dem der Sensor (21, 74) in Kontakt ist.

4. Gerät, Maschine oder Einrichtung nach einem der Ansprüche 1 bis 3, dadurch gekennzeichnet, daß der Sensor (21) in dem elastomeren Material (23, 89) eingebettet oder flächig in Kontakt mit dem elastomeren Material (73, 76, 82) angeordnet ist.

5. Gerät, Maschine oder Einrichtung nach Anspruch 4, dadurch gekennzeichnet, daß ein erster Verbindungsteil (61/68) eine zylinderförmige Vertiefung aufweist, in die ein Kolben (64, 70) unter Bildung eines engen zylindrischen Spaltes eingeführt ist, wobei der Kolben (64, 70) unter dem Druck eines zweiten Verbindungsteiles (65, 8) steht.

6. Gerät, Maschine oder Einrichtung nach einem der Ansprüche 1 bis 4, dadurch gekennzeichnet, daß zumindest eines der starren Verbindungsteile (71) zumindest ein weiteres starres Verbindungsteil (72) unter Zwischenschaltung von elastomerem Material (73) umfangsmäßig umgibt, wobei die Verbindungsteile (71, 72) vorzugsweise konzentrisch zueinander angeordnet und konzentrisch von elastomerem Material (73) umgeben sind.

7. Gerät, Maschine oder Einrichtung nach einem der Ansprüche 1 bis 6, dadurch gekennzeichnet, daß der bzw. die Sensoren (74) derart ausgerichtet sind, daß sie auf Drehmomente zwischen den elastisch verbundenen starren Verbindungsteilen (72, 75) ansprechen, wobei das elastomere Material (73) ein starres inneres Verbindungsteil (72) umfangsmäßig umgibt und der oder die Sensoren (74) unter einem Winkel zur Radialrichtung angeordnet ist bzw. sind.

8. Gerät, Maschine oder Einrichtung nach einem der Ansprüche 1 bis 6, dadurch gekennzeichnet, daß zumindest zwei starre Verbindungsteile (85, 86) vorzugsweise konzentrisch ineinandergreifen und umfangsmäßig eine nichtkreisförmige Ausbildung besitzen und daß der bzw. die Sensoren (90) in dem inzwischen den beiden Verbindungsteilen (85, 86) angeordneten elastomeren Material (89) derart ausgerichtet angeordnet sind, daß sie ein zwischen den Verbindungsteilen (85, 86) wirkendes Drehmoment feststellen.

9. Gerät, Maschine oder Einrichtung, wenigstens nach Anspruch 1, dadurch gekennzeichnet, daß die von dem bzw. den Sensoren (21, 74, 77, 90) abgegebenen Signale zur Anzeige gebracht und/oder für eine Steuerung des Gerätes, der Maschine oder Einrichtung oder damit verbundener Einheiten (Lenkung 34, Motor 35, Federung 32) verwendet werden.

10. Gerät, Maschine oder Einrichtung nach Anspruch 9, gekennzeichnet durch die Ausbildung als Fahrzeug, insbesondere Kraftfahrzeug, wobei zwischen. Verbindungsteilen des Fahrzeugs (Fig. 1), an dem Fahrgestell (5, 33, 36), der Karosserie (31, 55), der Lenkung (34), dem Motor (35), der Federung (32), dem Differential, dem Getriebe usw. integrierte Kraftmeßzellen (31, 36) angeordnet sind.

11. Gerät, Maschine oder Einrichtung nach Anspruch 10, dadurch gekennzeichnet, daß integrierte Kraftmeßzellen (31) in Federbeinen (2) des Fahrzeugs angeordnet sind.

12. Gerät, Maschine oder Einrichtung nach Anspruch 9 oder 10, dadurch gekennzeichnet, daß mehrere integrierte Kraftmeßzellen (31-36) in Abstand zueinander zur Momentenbestimmung angeordnet sind.

13. Gerät, Maschine oder Einrichtung nach einem der Ansprüche 9 bis 12, dadurch gekennzeichnet, daß ein Prozessor (100) vorgesehen ist, der die Meßwerte der integrierten Kraftmeßzellen (31-36) laufend oder periodisch empfängt und Signale zur Einstellung und/oder Regelung entsprechender Elemente des Geräts (Lenkung 34, Motor 35, Federung 32) abgibt.

14. Verfahren zum Betreiben eines Gerätes, einer Maschine oder einer Einrichtung insbesondere eines Fahrzeuges, das elastische Verbindungen zwischen seinen starren Teilen bzw. zur Lagerung aufweist, gekennzeichnet durch

Integrieren von Kraftmeßzellen (31-36) in den Verbindungen bzw. Lagerstellen,

Feststellen der auf das Gerät bzw. dessen Teile wirkenden Kräfte und/oder Momente mittels der in den elastischen Verbindungen integrierten Kraftmeßzellen (31-36),

Verarbeiten der mittels der Kraftmeßzellen (31-36) festgestellten Werte und

Optimieren der Betriebseigenschaften des Geräts anhand der Ergebnisse der Verarbeitung.

15. Verfahren nach Anspruch 14, dadurch gekennzeichnet, daß die auf mindestens einen Teil des Fahrzeuges, wie die Fahrzeugräder, die Lenkung (34), die Karosserie (5, 55), den Motor (35), das Getriebe (35) und/oder das Differential während der Fahrt ausgeübten Kräfte und/oder Momente festgestellt und zur Einstellung und/oder Regelung der Federung, Dämpfung, Höhenlage, Lenkung, Beschleunigungs- und/oder Bremskraft, Leistung und dergleichen verwendet werden.

16. Verfahren nach Anspruch 14 oder 15, dadurch gekennzeichnet, daß während der Fahrt des Fahrzeuges das dynamische Verhalten einzelner Teile des Fahrzeuges im Vergleich zueinander und/oder mit gespeicherten Bezugswerten zur Optimierung der Fahreigenschaften des Fahrzeuges ausgewertet werden.

17. Verfahren nach einem der Ansprüche 14 bis 16, dadurch gekennzeichnet, daß der Reifenzustand bzw. Reifendruck und/oder der Zustand der Stoßdämpfer durch Vergleich des dynamischen Verhaltens der Räder und/oder Achsen zueinander bzw. mit gespeicherten Bezugswerten kontrolliert wird.

18. Verfahren nach einem der Ansprüche 14 bis 17, dadurch gekennzeichnet, daß auf das Fahrzeug während der Fahrt auf Grund von Beschleunigung und/oder Verzögerung wirkende Kräfte und/oder Momente festgestellt und zur Regelung von Federung, Dämpfung, Lenkung, Höhenlage, Beschleunigungs- und/oder Bremskraft verwendet werden.

19. Verfahren nach einem der Ansprüche 14 bis 18, dadurch gekennzeichnet, daß bei Feststellung des Überschreitens eines oberen Grenzwertes der Verzögerung von Notmaßnahmen, wie Auslösen eines aufblasbaren Luftsackes, ausgelöst werden.

**Revendications**

1. Appareil, machine ou dispositif comprenant au moins deux pièces rigides appartenant à une liaison (22/24, 61/64, 71/72, 79/80, 86/87) entre lesquelles est disposé un matériau élastomère (23, 73, 76, 89), et comprenant au moins une cellule de mesure des forces (31—36) munie d'au moins un capteur (21, 74, 77, 90) qui détermine les forces et/ou les couples intervenant entre les pièces de la liaison, caractérisé par le fait que la cellule de mesure des forces (31—36) est intégrée avec le capteur (21, 74, 77, 90) aux pièces de la liaison (22/24, 61/64, 71/80, 86/87).

2. Appareil, machine ou dispositif selon la revendication 1, caractérisé par le fait que le matériau élastomère (76) est étroitement lié, en particulier par vulcanisation, à des surfaces des pièces rigides de la liaison (par exemple 64/65, 79/80), et qu'il est réalisé sous la forme d'un montage caoutchouc-métal (3).

3. Appareil, machine ou dispositif selon la revendication 1 ou 2, caractérisé par le fait que les pièces de la liaison (22/24, 61/64, 71/72) sont formées en un volume fermé pour l'essentiel dans lequel se trouve le matériau élastomère (23, 73) avec lequel le capteur (21, 74) est en contact.

4. Appareil, machine ou dispositif selon l'une des revendications 1 à 3, caractérisé par le fait que le capteur (21) est noyé dans le matériau élastomère (23, 89) ou disposé à plat en contact avec le matériau élastomère (73, 76, 82).

5. Appareil, machine ou dispositif selon la revendication 4, caractérisé par le fait qu'une première pièce de la liaison (61/68) présente un enfoncement en forme de cylindre dans lequel est introduit un piston (64, 70), avec formation d'un intervalle cylindrique étroit, le piston (64, 70) étant soumis à la pression d'une seconde pièce de la liaison (65, 8).

6. Appareil, machine ou dispositif selon l'une des revendications 1 à 4, caractérisé par le fait qu'au moins l'une des pièces rigides de la liaison (71) entoure sur son pourtour au moins une autre pièce rigide de la liaison (71) avec interposition de matériau élastomère (73), les pièces de la liaison (71, 72) étant de préférence disposées de manière concentrique l'une par rapport à l'autre et entourées de manière concentrique par du matériau élastomère (73).

7. Appareil, machine ou dispositif selon l'une des revendications 1 à 6, caractérisé par le fait que le ou les capteurs (74), respectivement, sont orientés de telle manière qu'ils répondent à des couples entres les pièces rigides de la liaison (72, 75) qui sont reliées élastiquement, le matériau élastomère (73) entourant sur son pourtour une pièce rigide intérieure de la liaison (72), et le ou les capteurs (74) étant disposé ou disposés, respectivement, en formant un angle par rapport à la direction radiale.

8. Appareil, machine ou dispositif selon l'une des revendications 1 à 6, caractérisé par le fait qu'au moins deux pièces rigides de la liaison (85, 86) pénètrent l'une dans l'autre, de préférence de manière concentrique, et présentent sur leur pourtour une conformation non circulaire, et par le fait que le ou les capteurs (90), respectivement, sont disposés dans le matériau élastomère (89) disposé entre les deux pièces de la liaison (85, 86) en étant orientés de telle manière qu'ils déterminent un couple agissant entre les pièces de la liaison (85, 86).

9. Appareil, machine ou dispositif au moins selon la revendication 1, caractérisé par le fait que les signaux fournis par le ou les capteurs (21, 74, 77, 90) sont amenés à un affichage et/ou sont utilisés pour commander l'appareil, la machine ou le dispositif, ou des unités reliées à ceux-ci (direction 34, moteur 35, suspension 32).

10. Appareil, machine ou dispositif selon la revendication 9, caractérisé par sa réalisation sous la forme d'un véhicule, en particulier d'un véhicule automobile, des cellules intégrées de mesure des forces étant disposées entre des pièces de la liaison du véhicule (figure 1), sur le châssis (5, 33, 36), la carrosserie (31, 55), la direction (34), le moteur (35), la suspension (32), le différentiel, la boîte de vitesse, etc.

11. Appareil, machine ou dispositif selon la revendication 10, caractérisé par le fait que les cellules intégrées de mesure des forces (31) sont disposées dans des jambes de force à ressort (2) du véhicule.

12. Appareil, machine ou dispositif selon la revendication 9 ou 10, caractérisé par le fait que plusieurs cellules intégrées de mesure des forces (31—36) sont disposées à distance les unes des autres pour la détermination des couples.

13. Appareil, machine ou dispositif selon l'une des revendications 9 à 12, caractérisé par le fait qu'il est prévu un processeur (100) qui reçoit en continu ou périodiquement les valeurs mesurées des cellules intégrées de mesure des forces (31—36) et qui fournit des signaux pour le réglage et/ou la régulation d'éléments correspondants de l'appareil (direction 34, moteur 35, suspension 32).

14. Procédé pour le fonctionnement d'un appareil, d'une machine ou d'un dispositif, en particulier d'un véhicule automobile, qui comporte des liaisons élastiques entre ses pièces rigides ou, respectivement, pour son montage, caractérisé par:

L'intégration de cellules de mesure des forces (31—36) aux liaisons ou, respectivement, aux points d'appui,

La détermination des forces et/ou des couples agissant sur l'appareil ou sur ses pièces, respectivement, au moyen des cellules de mesure des forces (31—36) qui sont intégrées dans les liaisons élastiques,

Le traitement des valeurs déterminées au moyen des cellules de mesure des forces (31—36); et:

L'optimisation des caractéristiques de fonctionnement de l'appareil à l'aide des résultats du traitement.

15. Procédé selon la revendication 14, caractérisé par le fait que l'on détermine les forces et/ou les couples exercés au cours de la marche sur une partie au moins du véhicule, comme les roues du véhicule, la direction (34), la carrosserie (5, 55), le moteur (35), la boîte de vitesse (35) et/ou le différentiel, et qu'on les utilise pour régler et/ou réguler la suspension, l'amortissement, la position en hauteur, la direction, la force d'accélération et/ou de freinage, la puissance et similaires.

16. Procédé selon la revendication 14 ou 15, caractérisé par le fait qu'au cours de la marche du véhicule, on exploite le comportement dynamique de diverses parties du véhicule en comparaison entre elles et/ou en comparaison avec des valeurs de référence enregistrées, afin d'optimiser la tenue de route du véhicule.

17. Procédé selon l'une des revendications 14 à 16, caractérisé par le fait que l'état des pneus ou, respectivement, la pression des pneus, et/ou l'état des amortisseurs est contrôlé par comparaison du comportement dynamique des roues et/ou des essieux entre eux ou avec des valeurs de référence enregistrées.

18. Procédé selon l'une des revendications 14 à 17, caractérisé par le fait que l'on détermine les forces et/ou les couples exercées sur le véhicule au cours de la marche du fait de l'accélération et/ou de la décélération, et qu'on les utilise pour réguler la suspension, l'amortissement, la direction, la position en hauteur, la force d'accélération et/ou de freinage.

19. Procédé selon l'une des revendications 14 à 18, caractérisé par le fait que, lorsque l'on établit le dépassement vers le haut d'une valeur limite supérieure de la décélération, on déclenche des mesures d'urgence comme le déclenchement d'un sac à air gonflable.

**Claims**

1. Apparatus, machine or device including at least two rigid connecting elements (22/24, 61/64, 71/72, 79/80 86/87), having elastomeric material (23, 73, 76, 89) arranged therebetween and at least one force measuring cell (31-36) having at least one sensor (21, 74, 77, 90) determining the forces and/or moments acting between the connecting elements, characterized in that the force measuring cell (31-36) is integrated with the sensors (21, 74, 77, 90) in the connecting elements (22/24, 61/64, 71/80, 86/87).

2. Apparatus, machine or device of claim 1, characterized in that the elastomeric material (76) is tightly connected, in particular vulcanized with the surfaces of the rigid connecting elements (e.g. 64/65, 79/80) and is formed as a rubber-bonded metal bearing (3).

3. Apparatus, machine or device of claim 1 or 2, characterized in that the connecting elements (22/24, 61/64, 71/72) are formed to an essentially closed space with the elastomeric material (23, 73) therein in contact with the sensor (21, 74).

4. Apparatus, machine or device of any of claims 1 to 3, characterized in that the sensor (21) is embedded in the elastomeric material (23, 89) or is arranged in a surface type contact with the elastomeric material (73, 76, 82).

5. Apparatus, machine or device of claim 4, characterized in that a first connecting element (61/68) is provided with a cylindrical recess into which a piston (64, 70) is inserted forming an narrow cylindrical gap the piston (64, 70) having the pressure of a second connecting element (65, 8) exerted thereon.

6. Apparatus, machine or device of any of the claims 1 to 4 characterized in that at least one of the rigid connecting elements (71) peripherally surrounds at least a further rigid connecting element (72) with elastomeric material (73) therebetween, the connecting elements (71, 72) being preferably arranged concentrically to each other and being surrounded concentrically by elastomeric material (73).

7. Apparatus, machine or device of any of claims 1 to 6 characterized in that the sensor(s) (74) are aligned such that they respond to torques between the elastically connected rigid connecting elements (72, 75) the elastomeric material (73) peripherally surrounding a rigid inner connecting element (72) and the sensor(s) (74) being arranged at an angle in respect of the radial direction.

8. Apparatus, machine or device of any of the claims 1 to 6 characterized in that at least two rigid connecting elements (85, 86) are engaged in each other preferably concentrically and have peripherally a non-circular form and that the sensor(s) arranged in the elastomeric material (89) between the two connecting parts (85, 86) are aligned such that they determine a torque acting between the connecting parts (85, 86).

9. Apparatus, machine or device at least according to claim 1 characterized in that the signals provided by the sensor(s) (21, 74, 77, 90) are indicated and/or used for controlling the apparatus, the machine or the device or units connected thereto (steering 34, motor 35, suspension 32).

10. Apparatus, machine or device of claim 9 characterized by the design as a vehicle, in particular a motor vehicle integrated force measuring cells (31, 36) being arranged between connecting parts of the vehicle (Fig. 1) at the chassis (5, 33, 36), the car body (31, 55), the steering (34), the motor (35), the suspension (32), the differential, the gearing etc.

11. Apparatus, machine or device of claim 10, characterized in that integrated force measuring cells (31) are provided in the spring legs (2) of the vehicle.

12. Apparatus, machine or device of claim 9 or 10, characterized in that several integrated force measuring cells (31-36) are arranged spaced to each other for torque determination.

13. Apparatus, machine or device of any of the claims 9 to 12, characterized in that there is provided a processor (100) continuously or periodically receiving the measuring values of the integrated force measuring cells (31-36) and provides signals for adjusting and/or controlling corresponding elements of the apparatus (steering 34, motor 35, suspension 32).

14. A method for operating an apparatus, a machine or a device in particular a vehicle, provided with elastic connections between its rigid parts or for supporting purposes characterized by

integrating force measuring cells (31-36) into the connections or supports, respectively,

determining the forces/and or moments acting onto the apparatus or the elements thereof by means of the force measuring cells (31-36) integrated in the elastic connections;

processing the values determined by the force measuring cells (31-36) and

optimizing the operating characteristics of the apparatus on the basis of the results of the processing.

15. The method of claim 14, characterized in that the forces and/or moments acting during the movement at least on one portion of the vehicle, as the vehicle wheels, steering (34), the car body (5, 55), the motor (35), the gearing (35) and/or the differential are used for the adjustment and/or control of the suspension, absorption, height above ground, steering, acceleration and/or braking forces, power and the like.

16. The method of claim 14 or 15, characterized in that during movement of the vehicle the dynamic responses of individual parts of the vehicle are evaluated in comparison to each other and/or to stored reference values for optimizing the moving characteristics of the vehicle.

17. The method of any of claims 14 to 16, characterized in that the condition of the tires or the tire pressure, respectively, and/or the condition of the shock absorbers are controlled by comparing the dynamic responses of the wheels and/or axles to each other and/or with stored reference values, respectively.

18. The method of any of the claims 14 to 17, characterized in that forces and/or moments acting onto the vehicle during the movement thereof and resulting from an acceleration and/or deceleration are determined and used for controlling of the suspension, absorption, steering, height above ground, acceleration and/or brake forces.

19. The method of any of the claims 14 to 18, characterized in that upon detection of exceeding an upper limit of the deceleration emergency measures are initiated as an activating airbag.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20